# EUROPÄISCHE PATENTSCHRIFT

(11) **EP 1 613 424 B1**
(45) Veröffentlichungstag und Bekanntmachung des Hinweises auf die Patenterteilung: **26.09.2018**
(21) Anmeldenummer: 04724561.8
(22) Anmeldetag: 31.03.2004
(51) Int. Cl.: B01J 19/00

(54) **MIKROREAKTOR IN PLATTENBAUWEISE MIT EINEM KATALYSATOR**
MICROREACTOR COMPOSED OF PLATES AND COMPRISING A CATALYST
MICROREACTEUR A PLAQUES COMPORTANT UN CATALYSEUR

(30) Priorität: 16.04.2003 DE 10317451
(43) Veröffentlichungstag der Anmeldung: 11.01.2006
(73) Patentinhaber: thyssenkrupp Industrial Solutions AG, 45143 Essen (DE)
(72) Erfinder: MARKOWZ, Georg, 63755 Alzenau (DE); ALBRECHT, Johannes, 61206 Wöllstadt (DE); EHRLICH, Johannes, 63755 Alzenau (DE); JUCYS, Michael, 64853 Otzberg (DE); KLEMM, Elias, 72119 Ammerbuch (DE); LANGE DE OLIVEIRA, Armin, 69115 Heidelberg (DE); MACHNIK, Reinhard, 63517 Rodenbach (DE); RAPP, Jürgen, 35510 Butzbach (DE); SCHÜTTE, Rüdiger, 63755 Alzenau (DE); SCHIRRMEISTER, Steffen, 45472 Mülheim an der Ruhr (DE); VON MORSTEIN, Olaf, 45149 Essen (DE); HEDERER, Hartmut, 44225 Dortmund (DE); SCHMITZ-NIEDERAU, Martin, 48159 Münster (DE)
(74) Vertreter: thyssenkrupp Intellectual Property GmbH
(86) Internationale Anmeldenummer: PCT/EP2004/003377
(87) Internationale Veröffentlichungsnummer: WO 2004/091771

(56) Entgegenhaltungen:
- EP-A- 0 903 174
- WO-A-98/37457
- JANICKE M T ET AL: "The Controlled Oxidation of Hydrogen from an Explosive Mixture of Gases Using a Microstructured Reactor/Heat Exchanger and Pt/Al2O3 Catalyst" JOURNAL OF CATALYSIS, ACADEMIC PRESS, DULUTH, MN, US, Bd. 191, Nr. 2, 25. April 2000 (2000-04-25), Seiten 282-293, XP004465467 ISSN: 0021-9517

## Beschreibung

Die Erfindung betrifft einen Mikroreaktor mit katalytischer Wandpräparation zur Durchführung heterogen katalysierter Gasphasenreaktionen im industriellen Maßstab. Der Reaktor ist analog einem Plattenwärmetauscher in Schichten aufgebaut, wobei die so entstehenden und durch Distanzelemente stabilisierten und segmentierten Räume Reaktionsräume und Wärmetransporträume darstellen. Der Schichtenaufbau ist derart dimensioniert, dass für den großtechnischen Einsatz für eine Produktion im Tonnenmaßstab optimale Verhältnisse bezüglich Strömung, Wärme- und Stofftransport, Reaktionskinetik, Verfahrenssicherheit und Statik vorliegen.

Mikroreaktoren in Plattenbauweise sind in der industriellen Anwendung weit verbreitet und in unterschiedlichstem Einsatz. Der Aufbau dieser gestapelten Reaktoren ist im Wesentlichen ähnlich und umfasst eine oder mehrere zentrale Zuleitungen für Edukte bzw. Wärmetransportmedien, von welchen Teilströme abzweigen und in die jeweiligen Schicht zugeführt werden. Nach der Durchströmung einer Schicht und dem jeweiligen chemischen oder physikalischen Prozessschritt, werden die Einzelströme stoffweise in zentralen Ableitungen zusammengefasst und nachfolgenden Schichten zugeführt oder aus dem Reaktor geleitet.

In US2002/0106311 und US5,534,328 sind Mikroplattenreaktoren der vorgenannten Art offenbart, in welchen eine Vielzahl von Schichten und Schichtabfolgen beschrieben werden, welche zum Teil unterschiedliche Funktionen erfüllen, wobei allerdings in Bezug auf eine optimierte Konstruktion oder Verfahrensführung für den großtechnischen Einsatz keine Lehre offenbart wird. Dies ist insbesondere in Bezug auf extremere Prozessbedingungen wie hohe Drücke, hohe Temperaturen und/oder stark exothermer Reaktionen oder explosiver Gaszusammensetzungen ein diesen Schriften innewohnender Mangel.

In DE 39 26 466 ist ein Mikroreaktor zur Durchführung chemischer Zweistoffreaktionen beschrieben, dessen Einsatz für Reaktionen mit starker Wärmetönung benannt wird und welcher auch für heterogen katalytische Reaktionen geeignet ist. In den Schichten sind Längsrillen angeordnet, die von dem Reaktionspartner nach einer Zusammenführung von im Wesentlichen zwei Medien durchströmt werden, während wechselweise in einer nachfolgenden Schicht ein Kühlmedium strömt. Diese quer zu den Reaktionsrillen verlaufende Kühlung erfolgt gemäß DE 39 26 466 am Ende der Längsrillen über die Schichtwand oder auf der kompletten Schichtlänge. Zur Einstellung der Wärmetransportvorgänge und erforderlicher Kompaktheit werden Wandstärken kleiner 1000 *µ*m angegeben, was den Einsatz dieses Reaktors für aggressivere Reaktionen unter hohen Drücken verbietet. In der industriellen Anwendung sind weiterhin häufig Katalysatormaterialien im Einsatz, die nicht aus der Gruppe der genannten katalytisch wirkenden Metalle stammen und nicht als Basismaterial einsetzbar sind.

In DE 196 54 361 wird ein Reaktor in Stapelbauweise beschrieben, welcher für chemisch-katalytische Prozesse eingesetzt wird, wobei der Katalysator als Schicht an den Innenwänden der Reaktionskanäle aufgebracht ist. Alternierend zu den die Reaktionskanäle enthaltenden Schichten sind Schichten angeordnet, in welchen analog den vorgenannten Schriften ein Wärmetransportmittel geführt wird, wobei gleichartige Schichten in fluidischer Verbindung stehen. In DE 196 54 361 wird eine sehr einfache Variante der Strömungsführung innerhalb des Reaktors offenbart, indem über einen quer liegenden Schlitz das von der vorherigen Schicht ankommende Reaktionsfluid auf die nachfolgende Reaktionsschicht bzw. den Ableitungskanal verteilt wird. Nachteilig ist, dass durch diese fast direkte Weiterleitung nur sehr geringe Homogenisierungsvorgänge zwischen den Teilströmen der einzelnen Kanäle ablaufen, so dass aufgrund unterschiedlicher Strömungswiderstände, welche zum Beispiel aus Fertigungstoleranzen der Wand- oder Katalysatoroberflächen sowie Ablagerungen von Depositen auf den inneren Oberflächen im Laufe der Reaktion, die Gefahr unterschiedlich stark durchströmter Kanäle gegeben ist. Hieraus folgt eine Verschlechterung der Reaktion, so dass hieraus eine verstärkte Bildung von Neben- und Folgeprodukten beziehungsweise ein erhöhter Anteil nicht reagierten Edukts am Ausgang folgt. Angaben zur reaktionsspezifischen Dimensionierung der einzelnen Schichten oder Kanaldimensionen sind der Schrift nicht zu entnehmen.

EP 1 031 375 offenbart einen Mikroreaktor zur Durchführung chemischer Reaktionen in horizontalen Räumen, welcher analog dem vorgenannten Reaktor funktioniert, wobei die Fluidweiterleitung zur nächsten Schicht oder Funktionsstufe über einen rotationssymmetrischen Kanal erfolgt. Entscheidend an dem in EP 1 031 375 offenbarten Mikroreaktor ist, dass die Dichtung zwischen den Platten ohne zusätzliche Dichtungsmaterialen mittels integrierten Abdichtzonen erfolgt, welche nur über die beidseitig hochwertige Oberflächenbeschaffenheit in diesem Bereich und entsprechenden Anpressdruck realisiert wird. Als Merkmal wird weiterhin genannt, dass je nach Bedarf diverse Prozesse und Synthesen zusammengestellt werden können, da die Funktionsmodule dieses Mikroreaktors leicht lösbar miteinander verbunden sind. In der industriellen Anwendung sind sehr hohe Anforderungen an die Oberflächenbeschaffenheit in Berührungs- und Revisionsbereichen sicherlich kritisch zu sehen, und für Reaktionen mit einer sehr ausgeprägten Wärmetönung oder Druckwechseln ist keine ausreichende Leckagesicherheit gegeben.

In EP 0 903 174 wird ein Mikroreaktor für Flüssigphasenreaktionen organischer Verbindungen unter Einsatz von Peroxiden als Oxidationsmittel offenbart, welcher das Problem der sicheren Temperaturführung über eine alternierende und stapelweise Abfolge von Reaktions- und Kühlschichten löst, wobei die Mikrokanäle der benachbarten Schicht immer im rechten Winkel zueinander verlaufen und eine maximale Restwanddicke zwischen Reaktionskanal und angrenzender Kühlschicht von 1000 *µ*m und ein maximaler hydraulischer Durchmesser der Reaktionskanäle von ebenfalls 1000 *µ*m aufgezeigt wird. Die zentrale Herausforderung der in dieser Schrift genannten peroxidischen Reaktionen ist der Explosionsschutz. Damit sind Dichtheit des Systems sowie die Sicherstellung einer optimalen Durchmischung der eingesetzten Reaktanten fundamental, um Bereiche mit explosiven Peroxid-Konzentrationen zu vermeiden, allerdings ist hierzu EP 0 903 174 außer der Dimensionierung der Kanalquerschnitte keine Lehre zu entnehmen. Der Explosionsschutz wird in der genanten Schrift nur unter dem Gesichtspunkt der sicheren Einhaltung der erforderlichen Temperatur und Konzentrationen betrachtet.

Aus DE 100 42 746 ist eine Vorrichtung und ein Verfahren bekannt, in welchem mindestens zwei fluide Medien miteinander reagieren, wobei gegebenenfalls weiterhin ein rieselfähiger oder wandanhaftender Katalysator vorliegt. Die Reaktion findet in dem beschriebenen Reaktor in flächig-spaltförmigen Reaktionsräumen statt. In den diese Reaktionsräume bildenden Platten sind Hohlräume oder Bohrungen vorgesehen, in welchen das Wärmetransportmedium hindurchgeführt wird. Grundidee dieses in DE 100 42 746 offenbarten Reaktors ist ein parallel und flächig durchströmter Reaktionsraum ohne weitere Einbauten, wobei einzelne Abstandhalter im Randbereich die Spaltweite zwischen zwei Platten sicherstellt. Dabei werden nur in einer Abmessung, nämlich in der Spaltweite, Mikrodimensionen im Bereich von 50 bis 5000 *µ*m eingestellt. Ein weiteres zentrales Merkmal ist die inhärente Sicherheit dieses Reaktors, da der geringe freie Durchmesser eine Flammenausbreitung unterbindet. Dieser Reaktor ist von der Grundidee sehr vielversprechend, allerdings sind im industriellen Einsatz bei den genannten großen flächigen Spalten Teilverschlüsse der Reaktionsschlitzen zu erwarten. Derartige Teilverschlüsse sind Folge von hohen Druckdifferenzen zwischen Reaktionsraum und Wärmetransportraum oder thermisch bedingter Spannungen, beispielsweise bei prozessbedingten An- oder Abfahrvorgängen.

Bei einer Wandbeschichtung mit einem katalytisch wirkenden Material ist weiterhin zu erwarten, dass vorgenannte Materialbewegungen sowie prozessbedingte Schwingungen und Vibrationen zu Abplatzungen führen, welche wiederum einen Teilverschluss zur Folge haben. Fertigungstechnisch sehr aufwändig sind die vielen Hohlräume in den Platten, welche weiterhin nur sehr schwer kontrolliert und gereinigt werden können. Die für viele Reaktionen erforderliche Möglichkeit zur gleich- oder gegengerichteten Durchströmung von Reaktionsschlitzen und Wärmetransporträumen besteht nicht.

Gegenüber dem eingangs beschriebenen Stand der Technik liegt der Erfindung das technische Problem zugrunde, einen Mikroreaktor für den großtechnischen industriellen Einsatz anzugeben, mit welchem heterogen katalytische Reaktionen bei hohen Temperaturen und Drücken sowie bei explosiven Prozesszuständen durchführbar sind, mit welchem Stoffmengen produzierbar sind, die im Bereich von Tonnen pro Tag liegen und eine Kapazitätserhöhung mittels einer einfachen Vervielfältigung der Reaktions- und Wärmetransporträume möglich ist.

Diese Aufgabe wird erfindungsgemäß aufgrund der Merkmale des Anspruchs 1 gelöst und durch die Merkmale der Unteransprüche ausgestaltet. Offenbart wird ein Mikroreaktor zur Durchführung heterogenkatalysierter Reaktionen, welcher eine Vielzahl von vertikal oder horizontal und im Wesentlichen parallel angeordneten Räumen aufweist. Diese Räume weisen mindestens je eine Zuleitung auf, welche mit mindestens einer Verteilereinheit verbunden ist und umfassen weiterhin Ableitungen, welche mit mindestens einer Sammeleinheit verbunden sind. Die Zuleitungen der Räume und Fluide gleichen Typs sind miteinander verbunden, wobei selbiges auch für die Ableitungen der Räume gleichen Typs gilt. Die Räume werden durch gestapelte Platten oder Schichten gebildet, wobei ein Teil der Räume Reaktionsräume darstellt, in welchen die chemisch-katalytische Reaktion abläuft, und der andere Teil der Räume stellt Wärmetransporträume zur Durchleitung eines Kühl- oder Heizmediums dar, wobei der Wärmetransport zwischen Reaktions- und Wärmetransporträumen durch mindestens eine gemeinsame Raumwand oder direkt anliegende benachbarte Platten erfolgt. In allen Räumen sind Distanzelemente angeordnet, um die Kraftdurchleitung eines von außen anliegenden Anpressdruckes durch den Plattenstapel zu leiten und den Verschluss der Mikrokanäle durch Verformung der freien Tragweite zu unterbinden. Diese Verformung ist Folge eines Differenzdruckes zwischen Reaktions- und Wärmetransportraum. Erfindungsgemäß ist auf den Innenwänden der Reaktorräume mindestens teilweise Katalysatormaterial aufgebracht. Hierbei wurde überraschenderweise entdeckt, dass der freie Strömungsquerschnitt in den Mikrostrukturen dieser Konstruktion nach dem Aufbringen des Katalysators einen hydraulischen Durchmesser kleiner 4000 *µ*m und ein Verhältnis von Schlitzbreite zu Schlitzhöhe von kleiner 800 aufweisen muss.

Abhängig vom gewählten Grundmaterial der Platten wird weiterhin von der Erfindung offenbart, dass eine besonders vorteilhafte Reaktorkonstruktion vorliegt, wenn der hydraulische Durchmesser des freien Strömungsquerschnitts unter 1500 *µ*m und idealerweise unter 500 *µ*m liegt, wobei ein Verhältnis zwischen der Abstandslänge benachbarter Distanzelemente zur Schlitzhöhe des Reaktionsraumes kleiner 800, vorrangig kleiner 450 und idealerweise unter 100 vorliegt. Dieses Längenverhältnis darf allerdings nicht kleiner als 10 sein. Der Abstand zweier Distanzelemente meint hierbei die lotrecht kleinste Distanz und ist damit im Falle paralleler Schlitze die Schlitzbreite. Unter Schlitzhöhe und Abstand der Distanzelemente sind die Größen nach einer Beschichtung zu verstehen, da nur diese den freien Strömungsquerschnitt bilden. Bei einer derartigen Plattenkonstruktion zeigte sich überraschender Weise, dass unerwünschte strömungsmechanische und chemische Randeffekte im Reaktionsraum vernachlässigbar sind.

Bei einer effektiven Plattenhöhe von kleiner 4000 *µ*m und einem metallischen Basismaterial der Platte, ist bezüglich des Wärmetransportes die Dicke der Katalysatorschicht die limitierende Größe für den Wärmetransport, welche eine Stärke bis ungefähr 2 mm aufweisen kann, womit ein quasi isothermer Betrieb des Mikroreaktors möglich ist.

Die Katalysatorbeschichtung der Innenräume kann auch auf den Sammel- oder Verteilerraum ausgedehnt sein, wobei auch ein zu dem in den Reaktionsschlitzen unterschiedlicher Katalysator in diesen Bereichen an den Wandflächen angebracht sein kann.

Die Formgebung der Distanzelemente ist in keiner Wiese eingeschränkt und kann rotationssymmetrisch, tropfenförmig, rhombenförmig oder vorteilhafterweise als Stege und idealerweise als durchgehende Stege gestaltet sein. Entscheidend ist ein ausreichendes Tragverhältnis, welches sich als Funktion aus den Materialeigenschaften des Basismaterials, der Prozesstemperatur und dem Differenzdruck zwischen benachbarten Räumen und dem resultierenden und von außen aufzubringenden Anpressdruck ergibt.

Der wesentliche Vorteil einer Gestaltung der Distanzelemente als durchgehende Stege ist der Einfluss auf das Strömungsverhalten in den auf diese Weise ausgebildeten rechteckigen Reaktionsschlitzen, die zusätzlich erzeugte Haftfläche für das Katalysatormaterial und fertigungstechnische Gesichtspunkte.

Das Strömungsverhalten, Diffusionseffekte und Stofftransportvorgänge können in definierten Schlitzen sehr gut simuliert und optimiert werden. Gleichzeitig kann der Einfluss von Querströmungen und Rückvermischungen unterbunden werden. Die Seitenflächen der Stege dienen dem an den Wänden anhaftenden Katalysator als Kontakt- und Haftfläche und stabilisieren so das Katalysatorbett. Aus fertigungstechnischer Sicht sind Platten mit gleichmäßigen Schlitzen oder Stegen auf Standardmaschinen technisch einfach und sehr wirtschaftlich herstellbar. Zur Bereitstellung einer ausreichenden Tragfläche zeigte sich, dass der Anteil der Stand- beziehungsweise Grundfläche der Distanzelemente auf einer Plattenfläche, welche einen Reaktions- oder Wärmetransportraum bildet, bezogen auf die gesamte Plattenfläche idealerweise im Bereich von 5-15% liegt, wobei der Anteil über 2,5% liegen und 30% nicht überschreiten sollte. Als Bezugsflächen sind in diesem Fall nur diejenigen Flächen der Platten zu verstehen, welche innerhalb der umlaufenden und die Reaktionsräume oder Wärmetransporträume abschließenden Dichtungen sowie Dichtschweiß- oder Dichtlötnähten liegen. Das außerhalb der Dichtungen angeordnete Plattenmaterial ist weitestgehend als Vollmaterial ausgebildet und ist für die vorgenannte Betrachtung der Tragflächen ohne Bedeutung. Bei einer hohen Druckdifferenz zwischen Prozessräumen und den Wärmetransporträumen ermöglichen die Kopfflächen der Distanzelemente somit ein hinreichendes Tragverhältnis zur Kraftdurchleitung einer über die beiden Endplatten oder endständigen Ankern oder Ankerplatten aufgebrachten Anpressdruck. Sind die Distanzelemente als Stege ausgeführt, so ist die kleinste Stegbreite 1000 *µ*m, Eine Stegbreite über 6000 *µ*m ist in der Regel wirtschaftlich und fertigungstechnisch nicht mehr interessant.

Eine weitere vorteilhafte Ausgestaltung der erfindungsgemäßen Vorrichtung liegt vor, wenn das katalytische Material in eine Vertiefung eingebracht wird, welche beispielsweise durch Materialabtrag von der Platte gebildet worden ist. Diese Art der Katalysatorplatzierung auf der Platte ermöglicht einen sehr gleichmäßigen Auftrag, da mechanisch beispielsweise mittels eines Schabers oder Schleifmittels das überstehende Katalysatormaterial auf Höhe der Basisplatte abgetragen werden kann. Die Vertiefungen können eine beliebige Form aufweisen und sind vorteilhafterweise in Nuten- oder Rillenform gestaltet, wobei eine derartige Nut oder Rille idealerweise immer genau zwischen zwei Stegen in einem Reaktionsspalt verläuft.

Weiterhin ist mit der Erfindung umfasst, dass mindestens Teile des Platten- oder des Stegwerkstoffes katalytisch wirken. Dies ist vorrangig der Fall, wenn metallische Werkstoffe, wie beispielsweise Edelmetalle, Mangan, Molybdän, Eisen, Chrom, Nickel und andere eingesetzt werden. Abhängig vom energetischen Verlauf der jeweils ablaufenden katalytischen Reaktion, können die Hauptströmungsrichtungen der benachbarten Reaktions- und Wärmetransporträume dergestalt angeordnet sind, dass die Durchströmung bezogen auf den nächstliegenden Raum im Gleich-, Gegenstrom oder mäanderförmig erfolgt. Es ist vor allem möglich, quasi isotherme Reaktionsbedingungen herzustellen, da parallel zu jedem Reaktionsraum in direkter Wirkverbindung auch der Wärmetransport erfolgt. Liegt ein metallisches Basismaterial vor, und sind entsprechend den oben genannten Angaben die Schlitz- und Plattengeometrien optimiert, wird der Wärmetransport vor allem von der Schichtdicke des Katalysatormaterial als limitiert.

In einer weiteren Ausführungsform sind die Stege je zweier Platten zueinander gerichtet und diese Stege bilden zueinander einen Winkel von 0° bis 90°. In einer besonders vorteilhaften Ausgestaltung sind diese Stege parallel und direkt übereinander liegend angeordnet. Bei einer nicht parallelen Anordnung der Stege wird ein starker Misch- und Verwirbelungseffekt erzielt.

In einer weiteren vorteilhaften Ausgestaltung der Erfindung ist vorgesehen, dass im Eingang und innerhalb der Reaktionsräume mindestens ein Bereich vorgesehen ist, in welchem mindestens zwei Fluide gemischt werden, wobei mindestens ein gasförmiges oder flüssiges Fluid eingedüst wird an welche sich eine Homogenisierungsstrecke anschließen kann. Erfindungsgemäß ist weiterhin umfasst, dass vor oder entlang dieser Homogenisierungsstrecke eine Vorrichtung beliebiger Bauform angeordnet ist, welche die zur Hauptströmungsrichtung senkrecht stehende freie Querschnittfläche verringert. Diese Verringerung der Querschnittsfläche erzeugt eine Erhöhung der Strömungsgeschwindigkeiten und somit eine starke Vermischung der Fluide. Die Bereiche mit vermindertem freien Strömungsquerschnitt stellen bei entsprechender Konstruktion eine mechanische Flammsperre dar. Diese Flammsperre oder Quench-Effekt verhindert somit den Übertritt von Zündvorgängen aus der Reaktionszone, welche vorrangig im Bereich der Reaktionsschlitze mit Katalysatorbeschichtung lokalisiert ist, hin zu anderen Prozesseinheiten, als auch den Flammeintritt in die Reaktionszone, ausgehend von der Verteiler- oder Sammeleinheit.

In einer weiteren erfindungsgemäßen Vorrichtung sind Bohrungen in der Raumwand angeordnet, welche bezogen auf die Senkrechte zur Hauptströmungsrichtung im Winkel von -60° bis +60° und vorzugsweise im Winkel von -30° bis +30° geneigt und über mindestens einen im Wesentlichen quer zu der Hauptströmungsrichtung liegenden gemeinsamen Kanal verbunden sind. Über diesen Hauptkanal und die Bohrungen erfolgt die Eindüsung eines Fluids in den Reaktionsraum beziehungsweise in die jeweiligen Reaktionsschlitze. Von der Erfindung ist weiterhin umfasst, dass in Strömungsrichtung am Ende der Reaktionsräume mindestens eine Vorrichtung vorgesehen ist, die die zur Hauptströmungsrichtung senkrecht stehende freie Querschnittfläche verringert, wobei die Vorrichtung eine beliebige Form aufweist und vorteilhafterweise als eine Vielzahl der Distanzelemente, als Erweiterungen der Stegbreiten oder als Blenden und idealerweise als Verringerung der Spalthöhe ausgeführt ist. Diese Querschnittsverringerung am Ende der Reaktionsräume dient der Vergleichmäßigung der Strömung und stellt analog der vorgenannten Gestaltung des Eingangsbereichs bei geeigneter Mikrostrukturierung eine mechanische Flammsperre dar und verhindert somit eine vom Katalysator ausgehende Zündung in die angrenzenden und in der Regel makrostrukturierten Reaktor- oder Prozesseinheiten hinein. Überraschenderweise stellte sich heraus, dass unter dem Erfordernis eines weitergehenden Explosionsschutzes im Bereich der Stauzone kein Katalysatormaterial mehr angeordnet sein darf, da eine vom Katalysator ausgehende Zündung sonst auch bei bestehender mechanischer Flammhemmung in die Sammeleinheit durch schlagen kann.

Die Vergleichmäßigung der Strömung ist sehr vorteilhaft, da beispielsweise Unebenheiten in der Katalysatorschicht unterschiedliche Druckdifferenzen entweder in Bereichen der Reaktionsräume oder einzelnen Schlitzen erzeugen, so dass es zu einer ungleichmäßig Durchströmung kommen würden, was zu entsprechenden Nachteilen in der Produktqualität führt, wie es aus dem Stand der Technik bekannt ist. Es zeigte sich, dass der Druckverlust durch die Querschnittsverengung am Auslauf der Platten mindestens um den Faktor 5 größer sein muss als die Schwankung der Druckdifferenz, welche sich aus den Fertigungstoleranzen der Katalysatorschicht ergeben. Idealerweise sollte der Druckverlust über die Stauzone um den Faktor 10 höher sein, als der vorgenannte schwankungsbedingte Druckverlust. Durch die Wahl der vorgenannten Kanalbreite, welche deutlich nicht im Mikrobereich liegt, kann dieses Element konstruktiv sinnvoll und fertigungstechnisch leicht in jedem einzelnen Kanal angeordnet werden.

Erfindungsgemäß werden weiterhin Verfahren zum Einsatz des vorgenannten Reaktors offenbart, welche bei Differenzdrücken im Bereich von 0 bar bis 15 bar durchgeführt werden, wobei der ideale Einsatzbereich abhängig von dem gewählten Basismaterial zwischen 0 bar und 5 bar liegt. Die möglichen Prozesstemperaturen reichen von Tieftemperaturen unter 0 °C bis Temperaturen von circa 500 °C. Zum Wärmetransport in den in den Wärmetransporträumen können flüssige oder gasförmige Medien hindurchgeleitet werden.

Eine besondere Ausgestaltung der Erfindung sieht vor, das die Medien in den Wärmetransporträumen während der Durchleitung durch Kondensation oder Verdampfung vollständig oder teilweise den Aggregatszustand ändern.

Damit sind von der Erfindung Verfahren umfasst, wie beispielsweise die Synthese von Propylenoxyd aus im Wesentlichen Propen und Wasserstoffperoxid oder Phenol aus im Wesentlichen aromatischen Kohlenwasserstoffen sowie weitere Synthese von Kohlenwasserstoffverbindungen und besonders von Oxygenaten von Kohlenwasserstoffverbindungen. Weiterhin ist der Reaktor geeignet für die Synthese von Wasserstoffperoxid aus Wasserstoff und Sauerstoff.

Die Erfindung wird nachstehend anhand von Ausführungsbeispiele darstellenden Zeichnungen erläutert. Es zeigen
Fig. 1 eine einzelne Reaktorplatte in der Draufsicht und die Lage der Detailansicht Fig. 5 im Eingangsbereich der Platte sowie die Lage der Detailansicht Fig. 7 am Ausgang der Platte sowie die Dichtungs- und Leitstegeanordnung;
Fig. 2 analog der Fig. 1 eine einzelne Reaktorplatte in der Draufsicht, welche keine integrierte Verteilereinheit aufweist, sondern auf der schmalen Plattenseite auf der gesamten Breite angeströmt wird; ;
Fig. 3 eine einzelne Wärmetransportplatte in der Draufsicht sowie eine Variante der Dichtungsanordnung und der Leitstege;
Fig. 4 als Schnittzeichnung beispielhaft eine Stapelfolge von Reaktor- und Wärmetransporträumen;
Fig. 5 in einer Detailansicht den Eingangsbereich der Schlitze sowie die Vorrichtung zur Eindüsung von Fluiden und die Homogenisierungsstrecke in zwei Ausführungsvarianten;
Fig. 6 die Lage der verwendeten Abmessungen
Fig. 7 in einer Detailansicht das Ende der Reaktionsschlitze beziehungsweise die Gestaltung der Distanzelemente sowie die Lage und Gestaltung der Stauvorrichtung in zwei Ausführungsvarianten;
Fig. 8 mögliche Anordnungen in einem Reaktionsraum.

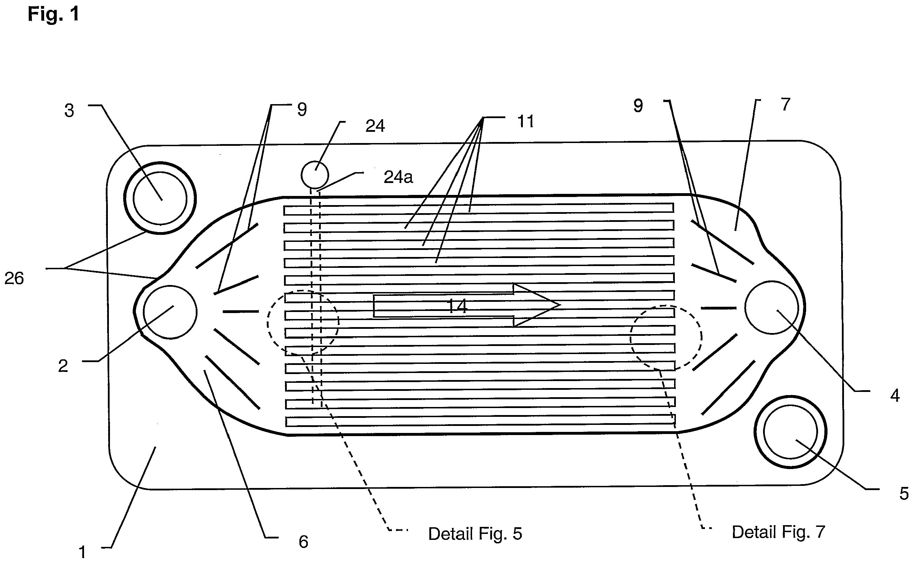

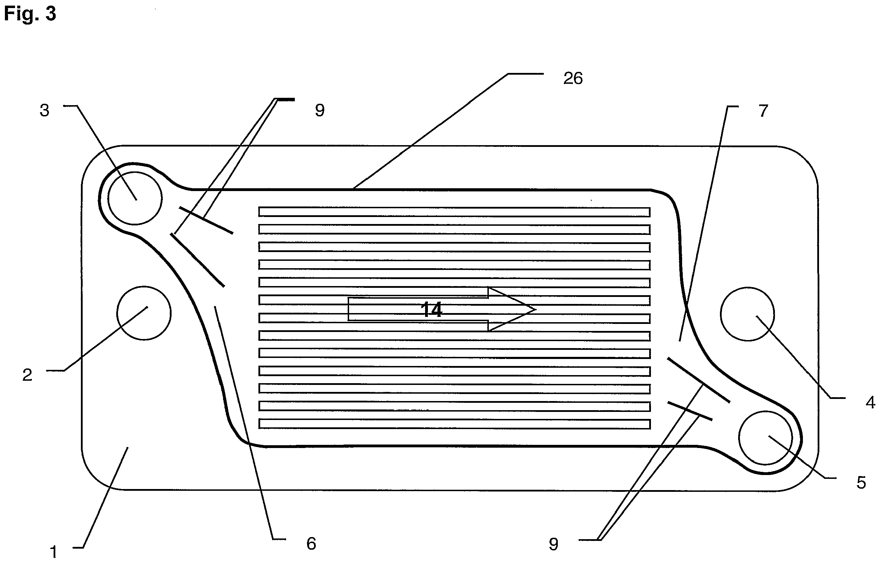

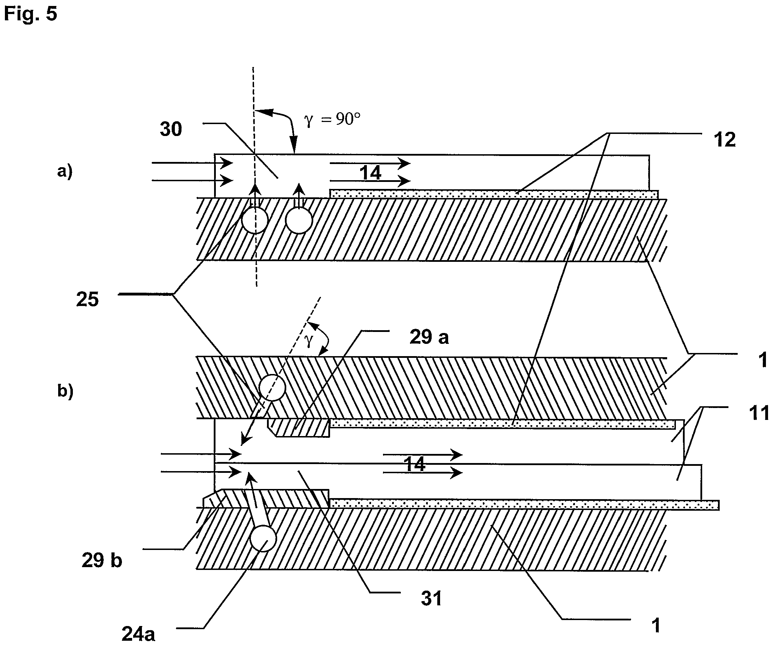

Fig. 1 ist eine einen Reaktionsraum bildende Reaktorplatte zu entnehmen, auf welcher ein ankommendes Edukt über die zentrale Zuleitung 2 in die Verteilereinheit 6 des Reaktionsraumes 8 führbar ist. In der Verteilereinheit sind Leitstege 9 angeordnet, welche dieses Edukt gleichmäßig auf die mit Katalysatormaterial beschichteten Schlitze verteilt, welche sich zwischen den Distanzelementen 11, hier als Stege gezeigt, ausbilden. Die Schlitze sind parallel angeordnet und geben die Hauptströmungsrichtung 14 vor. Am Ende der Schlitze in der Sammeleinheit 7 gezeigt, in welcher ein Produktstrom gefasst wird und dort mittels weiterer Leitstege 9 der zentralen Ableitung 4 zugeleitet wird. In Fig. 1 ist weiterhin die zentrale Zuleitung 24 für einen zweiten Eduktstrom gezeigt, welche quer zur Hauptströmungsrichtung 14 in der Basisplatte 1 liegende Kanäle 24a speist, welchen mit den in Fig. 5 gezeigten Bohrungen 25 verbunden sind. Über diese Bohrungen erfolgt die Eindüsung dieses zweiten Eduktstromes in den Reaktionsraum. Über irreversible Verbindungen und/oder Dichtungen 26 sind Reaktionsräume 8, Wärmetransporträume 10 sowie deren Zu- und Abläufe abgedichtet. In ähnlicher Weise ist die in Fig. 3 gezeigte Platte eines Wärmetransportraumes aufgebaut, wobei die Stege 11 in der gezeigten Ausführungsform mit den Stegen des Reaktionsraumes parallel und deckungsgleich verlaufen. Die Katalysatorbeschichtung und die Zuführungsleitung für weitere Fluide ist hierbei nicht vorgesehen.

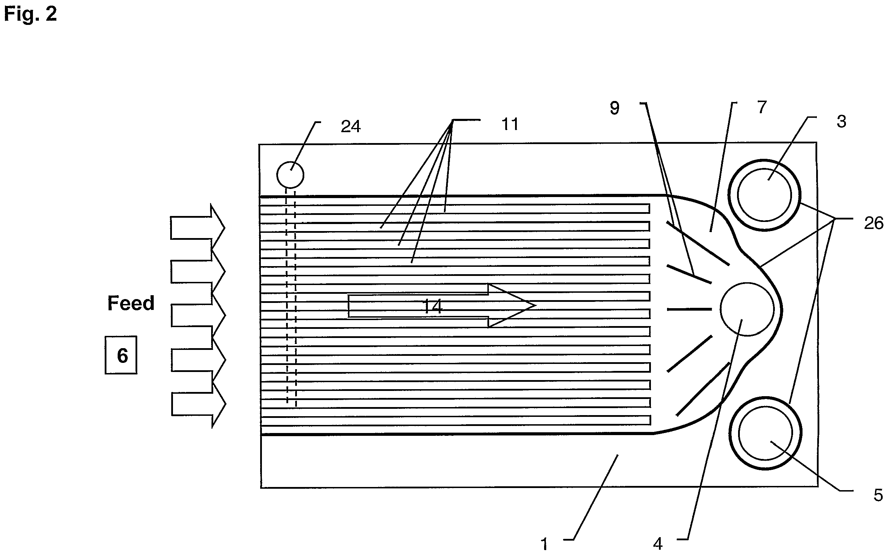

In Fig. 2 ist eine Reaktorplatte gezeigt, welche keinen integrierten Verteilerraum im Reaktionsraum aufweist, sondern durch einen zentralen Eduktstrom gemeinsam mit den anderen hier nicht dargestellten Reaktorplatten angeströmt wird.

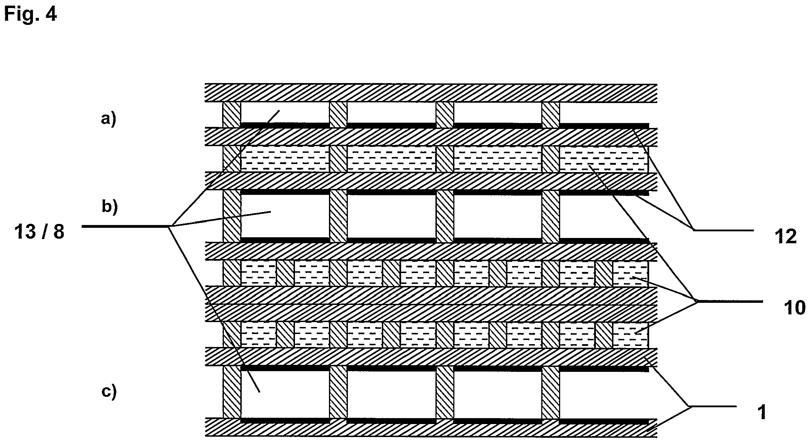

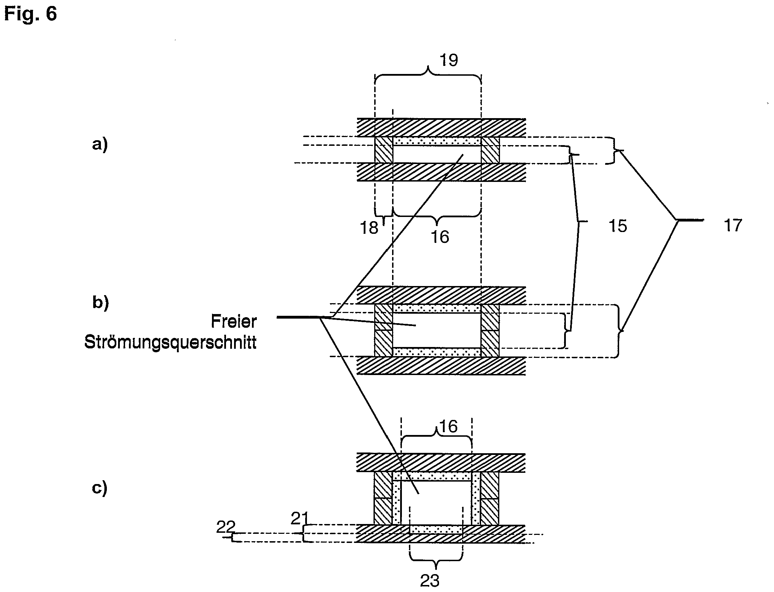

Fig. 4 zeigt als Schnittzeichnung beispielhaft eine Stapelfolge von Reaktor- und Wärmetransporträumen, wobei die Hauptströmungsrichtung senkrecht aus der Zeichenebene heraus oder in diese hinein führt. In dem Reaktionsraum a) sind einseitig mit Katalysatormaterial 12 beschichtete Schlitze zu erkennen, wobei der nachfolgende Wärmetransportraum gleichartig gestaltet ist. Der maximal mögliche Strömungsquerschnitt der Reaktionsschlitze ist gegenüber den Schlitzen des angrenzenden Wärmetransportraumes um die Querschnittsfläche der Katalysatorschicht vermindert. Im Reaktionsraum b) sind Schlitze zu erkennen, welche an beiden Plattenoberflächen mit Katalysator versehen sind. Es folgen Wärmetransporträume, welche eine unterschiedliche Anzahl an Schlitzen enthalten. Auch in dem Reaktionsraum c) sind beide Plattenwände mit Katalysator beschichtet, wobei eine Plattenoberfläche mit Nuten versehen ist, in welchen das Katalysatormaterial 12 (s. auch Fig. 6 c)) eingebracht ist. Daher vermindert sich der maximal mögliche Strömungsquerschnitt nur um die Querschnittsfläche einer Katalysatorschicht.

Fig. 5 zeigt in drei Varianten den Einströmungsbereich einzelner Reaktionsschlitze, wobei der Eduktstrom von der Verteilereinheit kommend in die Mischzone 30 einströmt, wo über den Zulauf 24a und die Bohrungen 25 ein zweites und drittes Fluid dem Eduktstrom zugemischt wird. Die Bohrungen 25 stehen wie in a) gezeigt rechtwinklig oder sind im Winkel γ (Fig. 5 b)) mit oder gegen die Hauptströmungsrichtung geneigt. Vor dem Eintritt in die Reaktionszone, welche sich durch die Wandbeschichtung mit Katalysatormaterial auszeichnet, ist eine Homogenisierungszone 31 angeordnet, in welcher durch Einbauten 29 eine Erhöhung der Strömungsgeschwindigkeit turbulente Verhältnisse geschaffen und optimale Vermischungen erreicht werden. In Fig. 5 b) sind zwei Ausführungsvarianten möglicher Einbauten gezeigt. Die Einbauten 29 b) verringern bereits in Bereich der Mischzone 30 den freien Strömungsquerschnitt, so dass Mikrostrukturen entstehen und bilden damit eine weitergehende mechanische Flammsperre als dies mit den Einbauten 29 a) gegeben ist.

Fig. 6 zeigt die Lage der verwendeten Abmessungen und die in dieser Schrift verwendeten Längenangaben. Es ist zu erkennen, dass der freie Strömungsquerschnitt eines Schlitzes sich aus der Spaltbreite 16 mal Steghöhe 17 minus der Querschnittfläche des aufgetragenen Katalysatormaterials 12 ergibt, wobei die Katalysatorquerschnittsfläche üblicherweise das Produkt aus Schichtdicke und Spaltbreite 16 darstellt. Ausnahmen stellen beispielsweise die in Fig. 6 c) gezeigten Varianten dar, in welchen die Stegflanken ebenfalls mit Katalysatormaterial beschichtet sind oder das Katalysatormaterial in einer Nut oder Rille eingebracht ist (s. Fig. 6 c)). Die für die Festigkeits-überlegungen maßgebliche Größe ist die effektive Plattenhöhe 22, welche im Bereich der geringsten Plattendicke vorliegt und im Beispiel c) im Bereich der Nut liegt. In den Bespielen a) und b) der Fig. 6 ist es die Plattenhöhe 21.

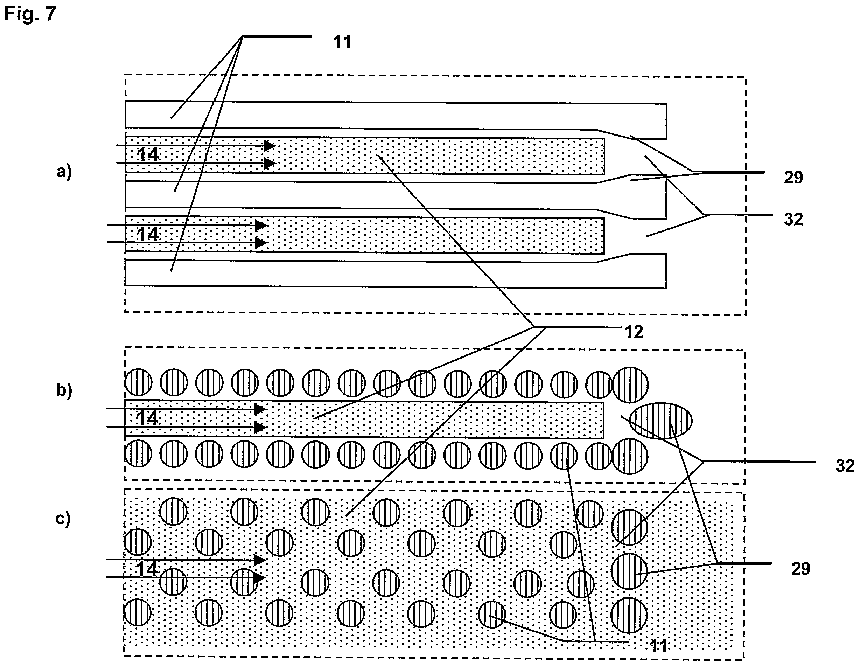

Fig. 7 zeigt in einer Detailansicht die Auslaufzone der Reaktionsschlitze in drei Gestaltungsvarianten sowie Ausführungsformen der Distanzelemente. Es sind in dem Ausführungsbeispiel a) in Fig. 7 Vergrößerungen der Stegbreiten 18 gezeigt, welche Stauzonen 32 darstellen. In dem Ausführungsbeispiel b) dieser Figur werden die Schlitze durch eine Art Säulengang gebildet, indem rotationssymmetrische Distanzelemente gassenweise angeordnet sind und in den Gassen Katalysatormaterial, dargestellt als punktierte Fläche, aufgetragen ist. In dieser Variante wird der Staueffekt über ovale Distanzelemente bzw. Blenden 29 erreicht, welche in der Hauptströmung der Schlitze angeordnet sind. Wie in der Teilansicht c) zu erkennen, sind die Distanzelemente in beliebiger Verteilung im Raum angeordnet, wobei die Stauzone 32 durch eine enger stehende Anordnung von Distanzelementen gebildet wird. Das Katalysatormaterial ist in diesem Beispiel auf der kompletten Plattenoberfläche aufgebracht und erstreckt sich auch auf den Bereich hinter der Staustufe.

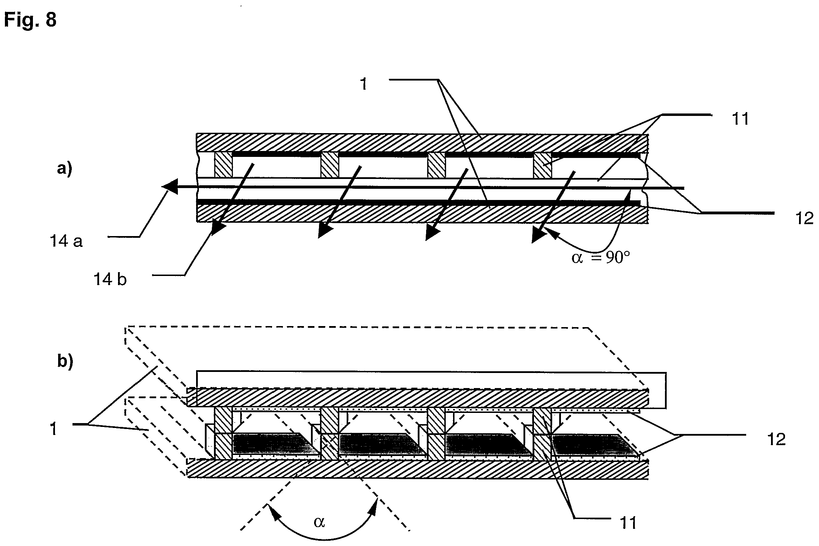

Zwei Ausführungsvarianten der Steganordnung innerhalb eines Reaktionsraumes zeigt Fig. 8. In beiden Beispielen sind die Stege der Platten zueinander gerichtet, wobei in a) die Stege zueinander rechtwinklig angeordnet sind. In der Ausführungsvariante b) liegt ein beliebiger Winkel α zwischen den Stegen vor. In beiden Fällen wird auf der Strecke zwischen Verteilereinheit 6 und Sammeleinheit 7 eine hohe Quervermischung erzielt.

### BEZUGSZEICHENLISTE

- 1: Platte, Basisplatte
- 2: Zuleitung FLuid 1
- 3: Zulauf Wärmetransportmedium
- 4: Ableitung Produktstrom
- 5: Ablauf Wärmetransportmedium
- 6: Verteilereinheit
- 7: Sammeleinheit
- 8: Reaktionsraum
- 9: Leitstege
- 10: Wärmetransportraum / Wärmetransportmedium
- 11: Distanzelement
- 12: Katalysatormaterial
- 13: Freier Strömungsquerschnitt
- 14: Hauptströmungsrichtung
- 15: Schlitzhöhe
- 16: Schlitzbreite
- 17: Steghöhe
- 18: Stegbreite
- 19: Stegabstand
- 20: Katalysatorhöhe
- 21: Plattenhöhe
- 22: Effektive Plattenhöhe
- 23: Rillen-/Nutbreite
- 24: Zulauf Fluid 2 / Fluid 3
- 25: Bohrungen
- 26: Dichtung
- 27: Distanzelement Zylinder
- 28: Leitstege
- 29: Blende, Einbauten
- 30: Mischzone
- 31: Homogenisierzone
- 32: Stauzone

## Patentansprüche

1. Mikroreaktor zur Durchführung heterogenkatalysierter Reaktionen, welcher eine Vielzahl von vertikal oder horizontal und im Wesentlichen parallel angeordneter Räume aufweist, welche mindestens je eine Zuleitung und eine Ableitung aufweisen, wobei die Zuleitungen mit mindestens einer Verteilereinheit und die Ableitungen mit mindestens einer Sammeleinheit verbunden sind, wobei die Räume durch gestapelte Platten oder Schichten gebildet werden, und ein Teil der Räume Reaktionsräume darstellt, und der andere Teil der Räume Wärmetransporträume darstellt, wobei der Wärmetransport zwischen Reaktions- und Wärmetransporträumen durch mindestens eine gemeinsame Raumwand erfolgt, welche durch eine gemeinsame Platte gebildet wird, wobei in allen Räumen beliebig geformte Distanzelemente angeordnet sind, **dadurch gekennzeichnet, dass** an den Innenwänden der Reaktorräume mindestens teilweise Katalysatormaterial aufgebracht ist, wobei der hydraulische Durchmesser, welcher definiert ist als der Quotient aus der vierfachen Fläche zur Umfangslänge des freien Strömungsquerschnitts, in den Reaktionsräumen kleiner als 4000 µm ist und vorteilhafterweise unter 1500 µm und idealerweise unter 500 µm liegt, und ein Verhältnis zwischen dem lotrecht kleinsten Abstand zweier benachbarter Distanzelemente zur Schlitzhöhe des Reaktionsraumes nach einer Beschichtung mit Katalysator von kleiner 800, vorrangig kleiner 450 und idealerweise unter 100 vorliegt, und größer oder gleich 10 ist.

2. Vorrichtung nach Anspruch 1, **dadurch gekennzeichnet, dass** der Anteil der Standbeziehungsweise Grundfläche der Distanzelemente, bezogen auf die Plattenfläche, welche innerhalb einer den Reaktions- oder Wärmetransportraum abschließenden und umlaufenden Dichtung sowie Dichtschweiß- oder Dichtlötnähten liegt, mindestens 2,5% beträgt, vorzugsweise im Bereich von 5-15% liegt und 30% nicht überschreitet.

3. Vorrichtung nach einem der beiden Ansprüche 1 oder 2, **dadurch gekennzeichnet, dass** Distanzelemente, welche als Stege oder durchgehende Stege ausgebildet sind eine Stegbreite größer oder gleich 1000 µm aufweisen und nicht breiter als 6000 µm sind.

4. Vorrichtung nach einem der Ansprüche 1 bis 3, **dadurch gekennzeichnet, dass** das katalytische Material in einem Schlitz im Wesentlichen auf der Platte aufgebracht ist.

5. Vorrichtung nach einem der Ansprüche 1 bis 4, **dadurch gekennzeichnet, dass** mindestens Teilflächen der Verteiler- und/oder Sammeleinheit mit katalytischem Material beschichtet sind oder aus katalytisch wirkendem Material gefertigt sind.

6. Vorrichtung nach einem der Ansprüche 1 bis 5, **dadurch gekennzeichnet, dass** das Material mindestens einer Teilfläche der Raumwand oder der Distanzelemente katalytisch wirkt.

7. Vorrichtung nach einem der Ansprüche 1 bis 6, **dadurch gekennzeichnet, dass** Zu- und Ableitungen der Reaktions- und Wärmetransporträume dergestalt angeordnet sind, dass die Durchströmung bezogen auf den nächstliegenden Raum im Gleich-, Gegenstrom oder mäanderförmig erfolgt.

8. Vorrichtung nach einem der Ansprüche 1 bis 7, **dadurch gekennzeichnet, dass** die Platten Vertiefungen in den Reaktionsräumen aufweisen, in denen zumindest teilweise das Katalysatormaterial eingebracht ist, wobei die Vertiefungen eine beliebige Form aufweisen können und vorteilhafterweise in Rillenform gestaltet sind und idealerweise immer genau in einem Spalt verlaufen.

9. Vorrichtung nach einem der Ansprüche 1 bis 8, **dadurch gekennzeichnet, dass** die Stege je zweier Platten zueinander gerichtet sind und diese Stege zueinander den Winkel von 0° bis 90° bilden und idealerweise diese Stege parallel und direkt übereinander liegend angeordnet sind.

10. Vorrichtung nach einem der Ansprüche 1 bis 9, **dadurch gekennzeichnet, dass** in Hauptströmungsrichtung am Eingang und innerhalb der Reaktionsräume mindestens eine Vorrichtung vorgesehen ist, die die zur Hauptströmungsrichtung senkrecht stehende freie Querschnittfläche verringert, wobei die Vorrichtung eine beliebige Form aufweist.

11. Vorrichtung nach einem der Ansprüche 1 bis 10, **dadurch gekennzeichnet, dass** am Eingang und innerhalb der Reaktionsräume mindestens ein Bereich vorgesehen ist, in welchem mindestens zwei Fluide gemischt werden, wobei mindestens ein Fluid im Wesentlichen senkrecht zur Hauptströmungsrichtung eingedüst wird und nach der Eindüsung eine Homogenisierungsstrecke angeordnet ist.

12. Vorrichtung nach Anspruch 11, **dadurch gekennzeichnet, dass** die Eindüsung eines Fluids über Bohrungen in der Raumwand geschieht, welche bezogen auf die Senkrechte zur Hauptströmung im Winkel von -60° bis +60° und idealerweise im Winkel von -30° bis +30° geneigt und durch mindestens einen im Wesentlichen quer zu der Hauptströmungsrichtung liegenden Fluidkanal verbunden sind.

13. Vorrichtung nach einem der Ansprüche 1 bis 12, **dadurch gekennzeichnet, dass** in Strömungsrichtung am Ende der Reaktionsräume mindestens eine Vorrichtung vorgesehen ist, die die zur Hauptströmungsrichtung senkrecht stehende freie Querschnittfläche verringert, wobei die Vorrichtung eine beliebige Form aufweist und vorteilhafterweise als eine Vielzahl der Distanzelemente, als Erweiterungen der Stegbreiten oder als Blenden und idealerweise als Verringerung der Spalthöhe ausgeführt ist.

14. Vorrichtung nach Anspruch 13, **dadurch gekennzeichnet, dass** der Druckverlust durch die Querschnittsverengung am Auslauf der Platten mindestens um den Faktor 5 größer ist, als die Schwankung der Druckdifferenz, welche sich aus den Fertigungstoleranzen der Katalysatorschicht und/oder des Spaltes ergeben.

15. Verfahren zum Einsatz der Vorrichtung nach einem der Ansprüche 1 bis 14, **dadurch gekennzeichnet, dass** in den Wärmetransporträumen flüssige oder gasförmige Medien hindurchgeleitet werden.

16. Verfahren nach Anspruch 15, **dadurch gekennzeichnet, dass** die Medien in den Wärmetransporträumen während der Durchleitung vollständig oder teilweise den Aggregatszustand ändern.

17. Verfahren nach einem der Ansprüche 15 oder 16, **dadurch gekennzeichnet, dass** das Verfahren bei Differenzdrücken zwischen den Reaktions- und Wärmetransporträumen durchgeführt wird, die im Bereich von 0 bar bis 15 bar und idealerweise zwischen 0 bar und 5 bar liegen.

18. Verfahren nach einem der Ansprüche 15 bis 17, **dadurch gekennzeichnet, dass** das Verfahren bei Temperaturen unter 500 °Celsius und auch bei Temperaturen unter 0 °Celsius eingesetzt wird.

19. Verfahren nach einem der Ansprüche 15 bis 18, **dadurch gekennzeichnet, dass** dieses zur Synthese von Kohlenwasserstoffverbindungen und besonders von Oxygenaten von Kohlenwasserstoffverbindungen eingesetzt wird.

20. Verfahren nach einem der Ansprüche 15 bis 18, **dadurch gekennzeichnet, dass** dieses zur Synthese von Propylenoxid aus im Wesentlichen Wasserstoffperoxid und Propen eingesetzt wird.

21. Verfahren nach einem der Ansprüche 15 bis 18, **dadurch gekennzeichnet, dass** dieses zur Synthese von Phenol eingesetzt wird.

22. Verfahren nach einem der Ansprüche 15 bis 18, **dadurch gekennzeichnet, dass** dieses zur Synthese von Wasserstoffperoxid aus im Wesentlichen Wasserstoff und Sauerstoff eingesetzt wird.

## Claims

1. Microreactor for carrying out heterogeneously catalyzed reactions, which comprises a multiplicity of chambers which are arranged vertically or horizontally and substantially parallel and have at least one feed line and one discharge line each, the feed lines being connected to at least one distributor unit and the discharge lines to at least one collecting unit, the chambers being formed by stacked plates or layers, and some of the chambers being reaction chambers and the other chambers being heat transfer chambers, the heat transfer between reaction chambers and heat transfer chambers being effected through at least one common chamber wall which is formed by a common plate, spacer elements having any desired shape being arranged in all chambers, **characterized in that** catalyst material is applied at least partly to the internal walls of the reactor chambers, the hydraulic diameter, which is defined as the quotient of four times the area and the circumferential length of the free flow cross section, being less than 4000 µm in the reaction chambers and advantageously less than 1500 µm and ideally less than 500 µm, and the ratio of the perpendicularly smallest distance between two adjacent spacer elements to the slot height of the reaction chamber after coating with catalyst being less than 800, primarily less than 450 and ideally less than 100, and being greater than or equal to 10.

2. Apparatus according to Claim 1, **characterized in that** the proportion of the standing or base area of the spacer elements, relative to the plate area, which is within an all-round seal sealing the reaction chamber or heat transfer chamber and seal weld seams or seal solder seams is at least 2.5%, preferably in the range of 5-15% and does not exceed 30%.

3. Apparatus according to either of the two Claims 1 and 2, **characterized in that** spacer elements which are in the form of fins or continuous fins have fin widths greater than or equal to 1000 µm and are not wider than 6000 µm.

4. Apparatus according to any of Claims 1 to 3, **characterized in that** the catalytic material is applied in a slot substantially on the plate.

5. Apparatus according to any of Claims 1 to 4, **characterized in that** at least partial areas of the distributor unit and/or collecting unit are coated with catalytic material or are produced from catalytically active material.

6. Apparatus according to any of Claims 1 to 5, **characterized in that** the material of at least a partial area of the chamber wall or of the spacer elements has catalytic activity.

7. Apparatus according to any of Claims 1 to 6, **characterized in that** feed lines and discharge lines of the reaction chambers and heat transfer chambers are arranged in such a way that the flow is cocurrent, countercurrent or meandering, based on the next chamber.

8. Apparatus according to any of Claims 1 to 7, **characterized in that** the plates have depressions in the reaction chambers, in which the catalyst material is at least partly introduced, it being possible for the depressions to have any desired shape and said depressions advantageously being in the form of furrows and ideally always running exactly in a slot.

9. Apparatus according to any of Claims 1 to 8, **characterized in that** the fins of two plates each face one another and these fins make an angle of from 0° to 90° with one another and ideally these fins are arranged parallel and lie directly one on top of the other.

10. Apparatus according to any of Claims 1 to 9, **characterized in that** at least one apparatus which reduces the free cross-sectional area perpendicular to the main flow direction is provided in the main flow direction, at the entrance and within the reaction chambers, the apparatus having any desired shape.

11. Apparatus according to any of Claims 1 to 10, **characterized in that** at least one region in which at least two fluids are mixed is provided at the entrance and within the reaction chambers, at least one fluid being sprayed in substantially perpendicular to the main flow direction, and a homogenization zone being arranged after the spraying-in.

12. Apparatus according to Claim 11, **characterized in that** the spraying in of a fluid is effected via bores in the chamber wall which are inclined at an angle of from -60° to +60° and ideally at an angle of from -30° to +30° relative to the perpendicular to the main flow and are connected by at least one fluid channel substantially transverse to the main flow direction.

13. Apparatus according to any of Claims 1 to 12, **characterized in that** at least one apparatus which reduces the free cross-sectional area perpendicular to the main flow direction is provided at the end of the reaction chambers in the direction of flow, the apparatus having any desired shape and advantageously being in the form of a multiplicity of spacer elements, in the form of extensions of the fin widths or in the form of orifice plates and ideally in the form of a reduction of the slot height.

14. Apparatus according to Claim 13, **characterized in that** the pressure drop due to the cross-sectional constriction at the outflow of the plates is at least a factor of 5 greater than the variation of the pressure difference which results from the manufacturing tolerances of the catalyst layer and/or of the slot.

15. Method of using the apparatus according to any of Claims 1 to 14, **characterized in that** liquid or gaseous media are passed through in the heat transfer chambers.

16. Method according to Claim 15, **characterized in that** the media in the heat transfer chambers completely or partly change the state of aggregation during the passage.

17. Method according to either of Claims 15 and 16 **characterized in that** the method is carried out at pressure differences between the reaction chambers and heat transfer chambers which lie in the range from 0 bar to 15 bar and ideally between 0 bar and 5 bar.

18. Method according to any of Claims 15 to 17, **characterized in that** the method is used at temperatures below 500°Celsius and also at temperatures below 0°Celsius.

19. Method according to any of Claims 15 to 18, **characterized in that** it is used for the synthesis of hydrocarbon compounds and in particular of oxygen products of hydrocarbon compounds.

20. Method according to any of Claims 15 to 18, **characterized in that** it is used for the synthesis of propylene oxide from substantially hydrogen peroxide and propene.

21. Method according to any of Claims 15 to 18, **characterized in that** it is used for the synthesis of phenol.

22. Method according to any of Claims 15 to 18, **characterized in that** it is used for the synthesis of hydrogen peroxide from substantially hydrogen and oxygen.

## Revendications

1. Microréacteur pour la réalisation de réactions sous catalyse hétérogène, qui comprend une pluralité de chambres agencées verticalement ou horizontalement et essentiellement en parallèle, qui comprennent au moins chacune une conduite d'alimentation et une conduite de déchargement, les conduites d'alimentation étant raccordées avec au moins une unité de distribution et les conduites de déchargement avec au moins une unité de collecte, les chambres étant formées par des plaques ou des couches superposées, et une partie des chambres étant des chambres de réaction et l'autre partie des chambres étant des chambres de transport de chaleur, le transport de chaleur entre les chambres de réaction et les chambres de transport de chaleur ayant lieu par au moins une paroi de chambre commune, qui est formée par une plaque commune, des éléments espaceurs de forme quelconque étant agencés dans toutes les chambres, **caractérisé en ce qu'**un matériau catalytique est appliqué au moins en partie sur les parois intérieures des chambres de réacteur, le diamètre hydraulique, qui est défini comme le quotient de quatre fois la surface sur la longueur périphérique de la section transversale d'écoulement libre, dans les chambres de réaction étant inférieur à 4 000 µm et avantageusement inférieur à 1 500 µm et idéalement inférieur à 500 µm, et un rapport entre l'écart vertical le plus petit entre deux éléments espaceurs voisins et la hauteur de fente de la chambre de réaction après un revêtement avec un catalyseur étant inférieur à 800, principalement inférieur à 450 et idéalement inférieur à 100, et supérieur ou égal à 10.

2. Dispositif selon la revendication 1, **caractérisé en ce que** la proportion de la surface d'appui ou de base des éléments espaceurs, par rapport à la surface des plaques, qui se situe à l'intérieur d'un joint d'étanchéité isolant et entourant la chambre de réaction ou de transport de chaleur, ainsi que de joints d'étanchéité soudés ou brasés, est d'au moins 2,5 %, de préférence dans la plage allant de 5 à 15 %, et ne dépasse pas 30 %.

3. Dispositif selon l'une quelconque des deux revendications 1 ou 2, **caractérisé en ce que** des éléments espaceurs, qui sont configurés sous la forme de traverses ou de traverses continues, présentent une largeur de traverse supérieure ou égale à 1 000 µm et n'ont pas une largeur supérieure à 6 000 µm.

4. Dispositif selon l'une quelconque des revendications 1 à 3, **caractérisé en ce que** le matériau catalytique est disposé dans une fente essentiellement sur la plaque.

5. Dispositif selon l'une quelconque des revendications 1 à 4, **caractérisé en ce qu'**au moins des surfaces partielles de l'unité de distribution et/ou de collecte sont revêtues avec un matériau catalytique ou sont fabriquées en un matériau catalytiquement actif.

6. Dispositif selon l'une quelconque des revendications 1 à 5, **caractérisé en ce que** le matériau d'au moins une surface partielle de la paroi de chambre ou des éléments espaceurs a un effet catalytique.

7. Dispositif selon l'une quelconque des revendications 1 à 6, **caractérisé en ce que** des conduites d'alimentation et de déchargement des chambres de réaction et de transport de chaleur sont agencées de telle sorte que l'écoulement ait lieu à co-courant, à contre-courant ou en méandres par rapport à la chambre suivante.

8. Dispositif selon l'une quelconque des revendications 1 à 7, **caractérisé en ce que** les plaques comprennent des creux dans les chambres de réaction, dans lesquels le matériau catalytique est introduit au moins en partie, les creux pouvant présenter une forme quelconque et étant avantageusement configurés sous la forme de rainures et passant idéalement toujours exactement dans une fente.

9. Dispositif selon l'une quelconque des revendications 1 à 8, **caractérisé en ce que** les traverses de deux plaques sont orientées l'une vers l'autre, et ces traverses forment l'une par rapport à l'autre un angle de 0° à 90°, et ces traverses sont idéalement agencées en parallèle et directement l'une sur l'autre.

10. Dispositif selon l'une quelconque des revendications 1 à 9, **caractérisé en ce que**, dans la direction d'écoulement principale, à l'entrée et dans les chambres de réaction, au moins un dispositif est prévu, qui réduit la surface de section transversale libre perpendiculaire à la direction d'écoulement principale, le dispositif présentant une forme quelconque.

11. Dispositif selon l'une quelconque des revendications 1 à 10, **caractérisé en ce qu'**à l'entrée et dans les chambres de réaction, au moins une zone est prévue, dans laquelle au moins deux fluides sont mélangés, au moins un fluide étant injecté essentiellement perpendiculairement à la direction d'écoulement principale et une section d'homogénéisation étant agencée après l'injection.

12. Dispositif selon la revendication 11, **caractérisé en ce que** l'injection d'un fluide a lieu par des alésages dans la paroi de la chambre, qui sont inclinés par rapport à la perpendiculaire à l'écoulement principal d'un angle de -60° à +60° et idéalement d'un angle de -30° à +30°, et reliés par au moins un canal de fluide essentiellement perpendiculaire à la direction d'écoulement principale.

13. Dispositif selon l'une quelconque des revendications 1 à 12, **caractérisé en ce que**, dans la direction d'écoulement, à la fin des chambres de réaction, au moins un dispositif est prévu, qui réduit la surface de section transversale libre perpendiculaire à la direction d'écoulement principale, le dispositif présentant une forme quelconque et étant avantageusement configuré sous la forme d'une pluralité d'éléments espaceurs, sous la forme d'élargissements des largeurs de traverses ou sous la forme de déflecteurs et idéalement sous la forme d'une réduction de la hauteur de la fente.

14. Dispositif selon la revendication 13, **caractérisé en ce que** la perte de charge en travers du rétrécissement de section transversale à la sortie des plaques est supérieur au moins d'un facteur de 5 à la fluctuation de la différence de pression qui découle des tolérances de fabrication de la couche de catalyseur et/ou de la fente.

15. Procédé d'utilisation du dispositif selon l'une quelconque des revendications 1 à 14, **caractérisé en ce que** des milieux liquides ou gazeux sont conduits dans les chambres de transport de chaleur.

16. Procédé selon la revendication 15, **caractérisé en ce que** les milieux dans les chambres de transport de chaleur modifient en totalité ou en partie l'état d'agrégation pendant le passage.

17. Procédé selon l'une quelconque des revendications 15 ou 16, **caractérisé en ce que** le procédé est réalisé à des pressions différentielles entre les chambres de réaction et de transport de chaleur dans la plage allant de 0 bar à 15 bar et idéalement comprises entre 0 bar et 5 bar.

18. Procédé selon l'une quelconque des revendications 15 à 17, **caractérisé en ce que** le procédé est utilisé à des températures inférieures à 500 °Celsius et également à des températures inférieures à 0 °Celsius.

19. Procédé selon l'une quelconque des revendications 15 à 18, **caractérisé en ce que** celui-ci est utilisé pour la synthèse de composés hydrocarbonés et en particulier de composés oxygénés de composés hydrocarbonés.

20. Procédé selon l'une quelconque des revendications 15 à 18, **caractérisé en ce que** celui-ci est utilisé pour la synthèse d'oxyde de propylène à partir essentiellement de peroxyde d'hydrogène et de propène.

21. Procédé selon l'une quelconque des revendications 15 à 18, **caractérisé en ce que** celui-ci est utilisé pour la synthèse de phénol.

22. Procédé selon l'une quelconque des revendications 15 à 18, **caractérisé en ce que** celui-ci est utilisé pour la synthèse de peroxyde d'hydrogène à partir essentiellement d'hydrogène et d'oxygène.
